# EUROPEAN PATENT APPLICATION

(11) **EP 4 668 673 A1**
(43) Date of publication of application: **24.12.2025**
(21) Application number: 24784150.5
(22) Date of filing: 28.03.2024
(51) Int. Cl.: H04L 9/40

(54) **COMMUNICATION METHOD AND COMMUNICATION SYSTEM**

(30) Priority: 07.04.2023 CN 202310405650
(71) Applicant: Huawei Technologies Co., Ltd., Shenzhen, Guangdong 518129 (CN)
(72) Inventor: PAN, Shiran, Shenzhen, Guangdong 518129 (CN); CUI, Nan, Shenzhen, Guangdong 518129 (CN); JIN, Liang, Shenzhen, Guangdong 518129 (CN); JIN, Mengtong, Shenzhen, Guangdong 518129 (CN)
(74) Representative: Isarpatent
(86) International application number: PCT/CN2024/084257
(87) International publication number: WO 2024/208065

(57) **Abstract**

This application provides a communication method, and relates to the field of permission control. In the method, a second device formulates a first policy of a first device for a first file, synchronizes the first policy to a server, and transmits the first file to the first device. The first device performs authentication with the server, obtains the first policy, and accesses the first file according to the first policy. The first device is logged in to by a first user. The second device may modify the first policy of the first device for the first file, or modify a first attribute of the first user, so that the second device adjusts access to the first file in real time according to a modified policy, or the first user adjusts access to the first file in real time based on a modified attribute, to implement real-time control, avoid leakage of sensitive data, and accurately protect information security.

## Description

### TECHNICAL FIELD

This application relates to the field of permission control, and in particular, to a communication method and a communication system.

### BACKGROUND

Organizations such as companies and government departments produce a large quantity of files (for example, documents) during operation. For some files, all employees of the organization may have permission to access, edit, forward, and the like. For some other files, only employees in a specific range of the organization have corresponding permissions due to confidentiality and the like. A technical goal pursued is to implement real-time control, avoid sensitive data leakage, and accurately protect information security through technical means.

### SUMMARY

Through in-depth research and analysis, the inventor finds that in an organization in which file policy protection is applied, if an employee opens (for example, directly opens or opens after downloading) a file on a network of the organization (for example, an internal network of the organization or an organization email received from an organization mailbox), the following results may exist: (1) After the employee opens the file, a device memory used by the employee caches the file. In this case, even if a provider modifies a control policy of the file to restrict access control of the employee, the access control of the employee on the file is not affected. (2) When an attribute of the employee changes, for example, the employee is transferred out of a department of the organization or resigns from the organization, original permissions of the employee still exist for a specific period of time. In other words, there is a specific time difference between an attribute change and a permission change of the employee. (3) In a process in which the employee accesses the file, the employee can still access the file according to a previous policy if a case in which a network is disconnected (also referred to as network disconnection) occurs. (4) In a case in which there are a plurality of files, currently, modification of an access control policy of a file can only be performed at a granularity of a single file, and access control policies of a plurality of files with a common characteristic cannot be processed and updated in batches. In other words, in a case such as an attribute is changed, a policy is adjusted, or a network is disconnected, permission control policies cannot be updated in real time and in batches. Consequently, there are technical problems that sensitive data may be leaked and information security protection is not high.

To resolve the foregoing technical problems, this application provides a communication method, a first device, a second device, a first server, a communication system, a computer-readable storage medium, a computer program product, and the like.

According to a first aspect, a communication method is provided, where the method is applied to a communication system, the communication system includes a first device, a second device, and a first server, the first device is logged in to by a first user, the first device, the second device, and the first server communicate through a first local area network, and the method includes:

The first device receives a first file from the second device;
the first device accesses the first file according to a first policy, where the first file is in an opened state;
the second device changes the first policy to a second policy, where the second policy is different from the first policy;
the second device transmits the second policy to the first server;
the first server transmits the second policy to the first device; and
in response to receiving the second policy from the first server, the first device immediately accesses the first file according to the second policy.

According to the first aspect, the first policy is a policy transmitted by the first server to the first device before the first device accesses the first file according to the first policy.

According to the first aspect or any implementation of the first aspect, before the first server transmits the first policy to the first device, the method includes:

The first server receives a first label and a first attribute of the first user from the first device, where the first label identifies the first file.

According to the first aspect or any implementation of the first aspect, the method includes:

In response to receiving the first label and the first attribute from the first device, the first server immediately obtains the corresponding first policy based on the first label, and determines whether the first attribute matches the first policy.

According to the first aspect or any implementation of the first aspect, the method includes:

In response to determining that the first attribute matches the first policy, the first server immediately transmits the first policy to the first device.

According to the first aspect or any implementation of the first aspect, before receiving the first label and the first attribute from the first device, the method includes:

The first server receives the first label, the first policy, and a first mapping relationship from the second device, where the first mapping relationship is a mapping relationship between the first label and the first policy.

According to the first aspect or any implementation of the first aspect, before the second device changes the first policy to the second policy, the method includes:

In response to detecting that the first device is disconnected from a network, the first device immediately no longer accesses the first file according to the first policy until the first device is reconnected to the network and passes identity authentication of the first user.

According to the first aspect or any implementation of the first aspect, that the first device immediately no longer accesses the first file according to the first policy includes:

The first file opened on the first device is immediately closed and is non-openable; or
content of the first file on the first device is immediately non-displayable.

According to the first aspect or any implementation of the first aspect, that the first device immediately no longer accesses the first file according to the first policy includes: The first device displays a prompt indicating that a network connection is required.

According to the first aspect or any implementation of the first aspect, the first file is always in the opened state before the first device immediately accesses the first file according to the second policy and after the first device accesses the first file according to the first policy and the first file is in the opened state.

According to the first aspect or any implementation of the first aspect, the second device transmits a second label to the first server to replace the first label, the first label used by a plurality of files on the first server is updated to the second label, and the first server has a correspondence between the second label and the second policy.

According to a second aspect, a communication method is provided, where the method is applied to a communication system, the communication system includes a first device, a second device, and a first server, the first device is logged in to by a first user, the first device, the second device, and the first server communicate through a first local area network, and the method includes:

The first device receives a first file from the second device;
the first device accesses the first file according to a first policy, where the first file is in an opened state;
the first server changes a first attribute of the first user to a second attribute, where the second attribute is different from the first attribute;
the first server transmits the second attribute to the first device;
the first device verifies whether the second attribute meets a requirement of the first policy; and
in response to verifying that the second attribute does not meet the requirement of the first policy, the first device immediately no longer accesses the first file according to the first policy.

According to the second aspect, that the first device immediately no longer accesses the first file according to the first policy includes:

The first file opened on the first device is immediately closed and is non-openable; or
content of the first file on the first device is immediately non-displayable.

According to the second aspect or any implementation of the second aspect, the first file is always in the opened state before the first device immediately no longer accesses the first file according to the first policy and after the first device accesses the first file according to the first policy and the first file is in the opened state.

According to the second aspect or any implementation of the second aspect, the first policy is a policy transmitted by the first server to the first device before the first device accesses the first file according to the first policy.

According to the second aspect or any implementation of the second aspect, before the first server transmits the first policy to the first device, the method includes:

The first server receives a first label and the first attribute of the first user from the first device, where the first label identifies the first file.

According to the second aspect or any implementation of the second aspect, the method includes:

In response to receiving the first label and the first attribute from the first device, the first server immediately obtains the corresponding first policy based on the first label, and determines whether the first attribute matches the first policy.

According to the second aspect or any implementation of the second aspect, the method includes:

In response to determining that the first attribute matches the first policy, the first server immediately transmits the first policy to the first device.

According to the second aspect or any implementation of the second aspect, before receiving the first label and the first attribute from the first device, the method includes:

The first server receives the first label, the first policy, and a first mapping relationship from the second device, where the first mapping relationship is a mapping relationship between the first label and the first policy.

According to a third aspect, a communication system is provided, where the communication system includes a first device, a second device, and a first server, the first device is logged in to by a first user, and the first device, the second device, and the first server communicate through a first local area network;
the first device performs the following steps:
receiving a first file from the second device;
accessing the first file according to a first policy, where the first file is in an opened state; and
in response to receiving a second policy from the first server, immediately accessing, by the first device, the first file according to the second policy;
the second device performs the following steps:
   changing the first policy to the second policy, where the second policy is different from the first policy; and
   transmitting the second policy to the first server; and
   the first server performs the following step:
transmitting the second policy to the first device.

According to the third aspect,
before the second device changes the first policy to the second policy, the first device further performs the following step:

In response to detecting that the first device is disconnected from a network, the first device immediately no longer accesses the first file according to the first policy until the first device is reconnected to the network and passes identity authentication of the first user.

According to the third aspect or any implementation of the third aspect, that the first device immediately no longer accesses the first file according to the first policy includes:

The first file opened on the first device is immediately closed and is non-openable; or
content of the first file on the first device is immediately non-displayable.

According to a fourth aspect, a communication system is provided, where the communication system includes a first device and a first server, the first device is logged in to by a first user, and the first device and the first server communicate through a first local area network;
the first device performs the following steps:
receiving a first file from a second device;
accessing the first file according to a first policy, where the first file is in an opened state;
verifying whether a second attribute meets a requirement of the first policy; and
in response to verifying that the second attribute does not meet the requirement of the first policy, immediately no longer accessing, by the first device, the first file according to the first policy; and
the first server performs the following steps:
   changing a first attribute of the first user to the second attribute, where the second attribute is different from the first attribute; and
   transmitting the second attribute to the first device.

According to the fourth aspect, that the first device immediately no longer accesses the first file according to the first policy includes:

The first file opened on the first device is immediately closed and is non-openable; or content of the first file on the first device is immediately non-displayable.

According to the fourth aspect or any implementation of the fourth aspect, the first policy is a policy transmitted by the first server to the first device before the first device accesses the first file according to the first policy.

According to a fifth aspect, a communication method is provided, where the method is applied to a first device, the first device is logged in to by a first user, the first device, a second device, and a first server communicate through a first local area network, and the method includes:

The first device receives a first file from the second device;
the first device accesses the first file according to a first policy, where the first file is in an opened state; and
in response to receiving a second policy from the first server, the first device immediately accesses the first file according to the second policy.

According to a fifth aspect, before receiving the second policy from the first server, the method includes:

In response to detecting that the first device is disconnected from a network, the first device immediately no longer accesses the first file according to the first policy until the first device is reconnected to the network and passes identity authentication of the first user.

According to the fifth aspect or any implementation of the fifth aspect, that the first device immediately no longer accesses the first file according to the first policy includes:

The first file opened on the first device is immediately closed and is non-openable; or
content of the first file on the first device is immediately non-displayable.

According to the fifth aspect or any implementation of the fifth aspect, the first file is always in the opened state before the first device immediately accesses the first file according to the second policy and after the first device accesses the first file according to the first policy and the first file is in the opened state.

According to a sixth aspect, a communication method is provided, where the method is applied to a first device, the first device is logged in to by a first user, the first device, a second device, and a first server communicate through a first local area network, and the method includes:
receiving a first file from the second device;
accessing the first file according to a first policy, where the first file is in an opened state, and in this case, an attribute of the first user is a first attribute;
in response to receiving a second attribute from the first server,
verifying whether the second attribute meets a requirement of the first policy; and
in response to verifying that the second attribute does not meet the requirement of the first policy, immediately no longer accessing the first file according to the first policy.

According to the sixth aspect, that the first device immediately no longer accesses the first file according to the first policy includes:

The first file opened on the first device is immediately closed and is non-openable; or
content of the first file on the first device is immediately non-displayable.

According to the sixth aspect or any implementation of the sixth aspect, the first file is always in the opened state before the first device immediately no longer accesses the first file according to the first policy and after the first device accesses the first file according to the first policy and the first file is in the opened state.

According to the sixth aspect or any implementation of the sixth aspect, the first policy is a policy transmitted by the first server to the first device before the first device accesses the first file according to the first policy.

According to a seventh aspect, an electronic device is provided, where the electronic device is a first device, the first device includes a processor and a memory, the memory stores a computer program, and when the computer program is run by the processor, the first device is enabled to perform the fifth aspect, any implementation of the fifth aspect, the sixth aspect, or any implementation of the sixth aspect.

According to an eighth aspect, a computer-readable storage medium is provided, where the computer-readable storage medium stores a computer program, and when the computer program is run on a first device, the first device is enabled to perform the fifth aspect, any implementation of the fifth aspect, the sixth aspect, or any implementation of the sixth aspect.

According to a ninth aspect, a computer program product is provided, and is stored in a computer-readable storage medium. When the computer program product is run on a first device, the first device is enabled to perform the fifth aspect, any implementation of the fifth aspect, the sixth aspect, or any implementation of the sixth aspect.

According to a tenth aspect, a chip is provided, where the chip includes a processor and a memory coupled to the processor, the memory stores a computer program, the chip is located in a first device, and when the processor executes the computer program, the first device is enabled to perform the fifth aspect, any implementation of the fifth aspect, the sixth aspect, or any implementation of the sixth aspect.

### BRIEF DESCRIPTION OF DRAWINGS

FIG. 1 is a diagram of a scenario of a communication method according to an embodiment of this application;
FIG. 2(a) and FIG. 2(b) are a diagram of communication interaction of a communication method according to an embodiment of this application;
FIG. 3A to FIG. 3D are diagrams of communication interaction for providing real-time policy protection for file transmission according to this application;
FIG. 4 is a diagram of effect before and after a method in this application is applied when a policy is modified after the first device opens the file;
FIG. 5 is a diagram of effect before and after a method in this application is applied when an attribute of a first user who logs in to a first device changes;
FIG. 6 is a diagram of effect before and after a method in this application is applied when a policy is modified during network disconnection of a first device;
FIG. 7 is a diagram of effect before and after a method in this application is applied when a first device just receives a file;
FIG. 8 is a detailed description of a procedure of this application with reference to internal modules;
FIG. 9 is a diagram of a protected file that is spliced and to be transmitted by a second device according to this application;
FIG. 10 is an example diagram of limiting a permission after network disconnection according to this application;
FIG. 11 is an example diagram of a permission change caused by policy modification according to this application;
FIG. 12 is an example diagram of a permission change caused by a change of a first attribute of a first user according to this application;
FIG. 13 is an example diagram of label division according to this application; and
FIG. 14 is a diagram of a structure of a first device according to this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

The following clearly describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

For ease of description, the following uses a "company" as an example of an organization for specific description. It is well-known to a person skilled in the art that the technical solutions of this application are also applicable to a non-company organization. Similarly, for ease of description, the following uses an internal network as an example of a network.

In this application, after attributes of different users match different policies, the different users have different permissions on a file. The permission herein includes but is not limited to one or more of accessing, copying, modification, forwarding, printing, and the like. The attribute of the user includes but is not limited to a name, a phone number, an email address, an employee ID, and the like of a file receiver (a first user who logs in to a first device in the following). In other words, content that can identify user information may be referred to as the attribute of the user.

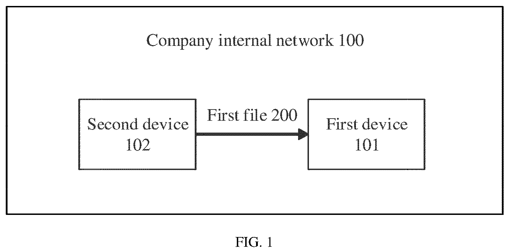

For example, FIG. 1 is a diagram of a scenario of a communication method. As shown in FIG. 1, a first device 101, a second device 102, and a first server 103 (not shown in FIG. 1) are run in a company internal network 100. The first device 101 is logged in to by a first user, the second device 102 is logged in to by a second user, and both the first user and the second user are employees of a first company. The first company is a company to which the company internal network 100 belongs, and the first device 101 and the second device 102 may be devices of the first company, or the first device 101 and the second device 102 may alternatively be devices that are of a company other than the first company and that can access the company internal network 100 after installing corresponding software. The second device 102 first sets a control policy, for example, a first policy, for the first file 200 for the first device 101. Then, the second device 102 transmits the first file 200 to the first device 101. After receiving the first file 200, the first device 101 accesses the first file 200 according to the first policy.

A control policy for the first file 200 for the second user is the first policy. For example, the first policy may be that an employee of a first department can access any file transmitted on the company internal network 100.

The first policy may be configured or selected by the second user by using the second device 102. For example, for the control policy, N policies are preset in the first company, where N is a positive integer greater than or equal to 1. When transmitting the first file 200 to the first device 101 of the first user, the second device 102 of the second user may select the first policy by default, or the transmission can be performed only after the second device 102 of the second user selects the first policy.

Alternatively, an attribute of the first user is a first attribute. For example, the first attribute may be that the first user is an employee of the first department of the first company, or the first attribute may be that the first user works at the first company.

For example, there are two policy updating manners. In a first manner, the second device 102 of the second user or the first server 103 changes the first policy of the first user to a second policy. In a second manner, the second device 102 of the second user or the first server 103 changes the first attribute of the first user to a second attribute. For example, the second policy is that an employee of the first company cannot access a file with a level above secret in the company internal network 100. Alternatively, for example, the second attribute is that the second user is an employee of a second department of the first company; or the second attribute is that the second user has resigned from the first company.

Optionally, the second policy is one of the N policies, and the second policy is different from the first policy. In this case, N is a positive integer greater than or equal to 2.

Optionally, the second policy is configured by the second user, and the second policy is different from the first policy.

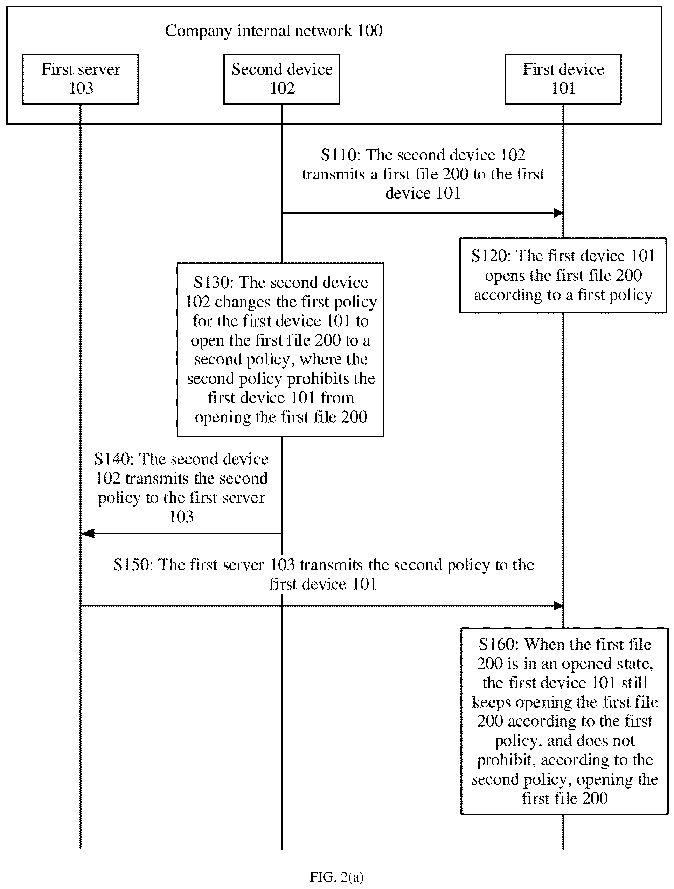

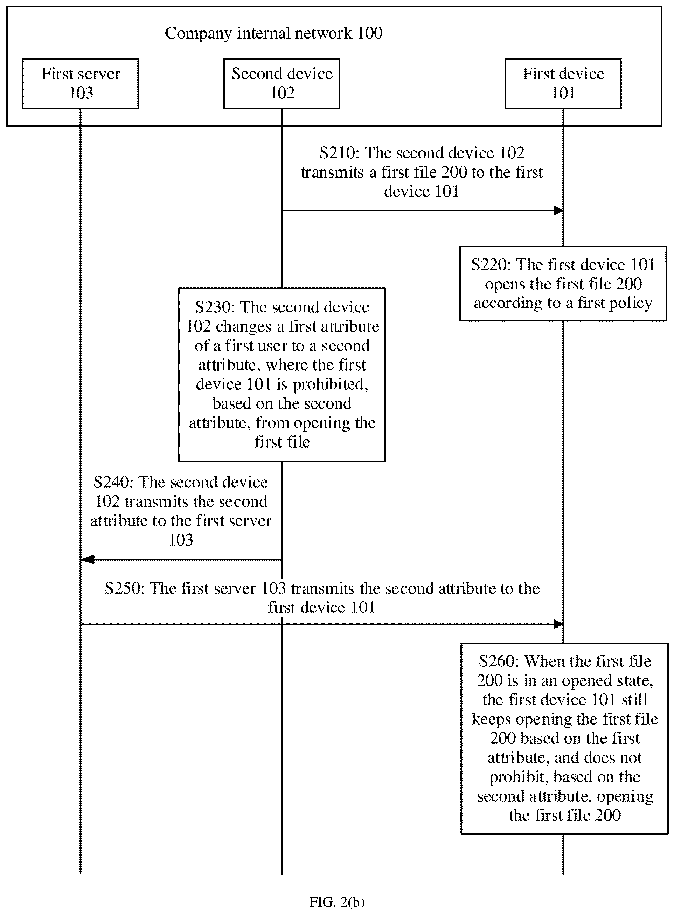

After the second device 102 transmits the first file 200 to the first device 101, the second user may change the first policy of the first user to the second policy, or the second user may change the first attribute of the first user to the second attribute. For example, after the first policy is changed to the second policy, or the first attribute is changed to the second attribute, for a situation of accessing the first file by the first user, refer to FIG. 2(a) and FIG. 2(b). In other words, a method procedure shown in FIG. 2(a) and FIG. 2(b) is based on FIG. 1. The prerequisite in FIG. 1 is not described in detail in FIG. 2(a) and FIG. 2(b) again.

It should be noted that FIG. 2(a) and FIG. 2(b) shows only an example of a diagram of communication interaction of a communication method. As shown in FIG. 2(a) and FIG. 2(b), any two of the first device 101, the second device 102, and the first server 103 are connected through the company internal network 100. The first user and the second user are employees of the first company. The company internal network 100 is an internal network used by the first company. Optionally, the second user is a leader of the first company, and the first user is a grassroots employee of the first company.

As shown in FIG. 2(a), the communication method includes the following steps.

S110: The second device 102 transmits the first file 200 to the first device 101.

For example, that the second device 102 transmits the first file 200 to the first device 101 includes: The second device 102 directly transmits the first file 200 to the first device 101, or the second device 102 transmits the first file 200 to the first device 101 through a second server. The second server is connected to the first device 101 and the second device 102 through the company internal network 100.

Optionally, the second server may be the same as or different from the first server 103.

For example, when transmitting the first file 200 to the first device 101, the second device 102 indicates the first device 101 to access the first file 200 according to the first policy.

S120: The first device 101 opens the first file 200 according to the first policy.

S130: The second device 102 changes the first policy for the first device 101 to open the first file 200 to the second policy, where the second policy prohibits the first device 101 from opening the first file 200.

The first policy is different from the second policy.

Alternatively, another user of the first company changes, by using the second device 102, the first server 103, or another device of the first company, the first policy for the first user to open the first file 200 to the second policy. In other words, in this application, the second user may change the first policy by using the second device, or the another user of the first company may change the first policy by using the second device or the another device of the first company. The another user of the first company does not include the second user. For example, because one employee may have a plurality of leaders, the another person may be a person in charge of a department (for example, a human resource department) in the first company, a person in charge of the company, or the like.

S140: The second device 102 transmits the second policy to the first server 103.

After the second user or the another user of the first company changes, by using the second device 102, the first policy corresponding to the first device 101 or the first user to the second policy, the second device 102 transmits the second policy to the first server 103.

Alternatively, after the another user of the first company changes, by using the another device of the first company, the first policy corresponding to the first device 101 or the first user to the second policy, the another device transmits the second policy to the first server 103.

S150: The first server 103 transmits the second policy to the first device 101.

In S120 to S160 and corresponding alternative steps, the first file 200 is always in an opened state on the first device 101. In addition, the first device 101 is also always logged in to by the first user.

S160: When the first file 200 is in the opened state, the first device 101 still keeps opening the first file 200 according to the first policy, and does not prohibit, according to the second policy, opening the first file 200.

As shown in FIG. 2(b), the communication method includes the following steps.

S210: The second device 102 transmits the first file 200 to the first device 101.

For example, that the second device 102 transmits the first file 200 to the first device 101 includes: The second device 102 directly transmits the first file 200 to the first device 101, or the second device 102 transmits the first file 200 to the first device 101 through a second server. The second server is connected to any one of the first device 101, the second device 102, and the first server 103 through the company internal network 100.

Optionally, the second server may be the same as or different from the first server.

S220: The first device 101 opens the first file 200 according to the first policy.

S230: The second device 102 changes the first attribute of the first user to the second attribute, where the first device 101 is prohibited, based on the second attribute, from opening the first file.

S240: The second device 102 transmits the second attribute to the first server 103.

S250: The first server 103 transmits the second attribute to the first device 101.

S260: When the first file 200 is in an opened state, the first device 101 still keeps opening the first file 200 based on the first attribute, and does not prohibit, based on the second attribute, opening the first file 200.

In S220 to S260 and corresponding alternative steps, the first file 200 is always in the opened state on the first device 101. In addition, the first device 101 is also always logged in to by the first user.

Descriptions that are not detailed in all the steps in FIG. 2(b) are the same as detailed descriptions in the corresponding steps in FIG. 2(a). Details are not described herein again.

Optionally, the communication method may alternative include: changing the first policy to the second policy, and changing the first attribute to the second attribute. For a corresponding step, refer to the foregoing description. Details are not described herein again.

Through in-depth research and analysis, the inventor finds that the communication method shown in FIG. 2(a), the communication method shown in FIG. 2(b), and the communication method shown in combination of FIG. 2(a) and FIG. 2(b) all have the following disadvantages: (1) After the first user opens the first file 200 by using the first device 101, a memory of the first device 101 caches the first file 200. In this case, even if the control policy of the first file 200 is changed from the first policy to the second policy, the first device 101 logged in to by the first user can still access the first file 200 according to the first policy. (2) After the first user opens the first file 200 by using the first device 101, even if the first attribute of the first user is changed to the second attribute, for example, the first user is transferred from an original department, a first permission of the first user still exists for a specific period of time, and the first permission corresponds to the first attribute. In other words, there is a time difference between an attribute change of the first user and a permission change of the first user. As a result, within the time difference, the first user can still access the first file 200 based on the first attribute by using the first device 101 or another device logged in to by the first user. (3) In a process in which the first user accesses the first file 200 by using the first device 101, once network disconnection occurs, the first device 101 of the first user may still access the first file 200 according to the first policy or based on the first attribute, but not access the first file 200 according to the second policy or based on the second attribute.

To resolve the foregoing technical problem, this application provides a communication method, and relates to the first device, the second device, the server, a communication system, a computer-readable storage medium, a computer program product, and the like.

The communication method provided in this application is based on FIG. 1. In other words, all prerequisites in FIG. 1 are applicable to the communication method provided in this application and other embodiments.

The communication method provided in this application may include four procedures: a file transmission procedure, a policy change procedure, an attribute change procedure, and a network disconnection processing procedure. The file transmission procedure relates to transmission of the first file; the policy change procedure relates to a change from the first policy of the first device; the attribute change procedure relates to a change of the first attribute of the first user; and the network disconnection processing procedure relates to processing when the first device is disconnected from a network. The following separately describes the procedures in detail with reference to figures and text descriptions.

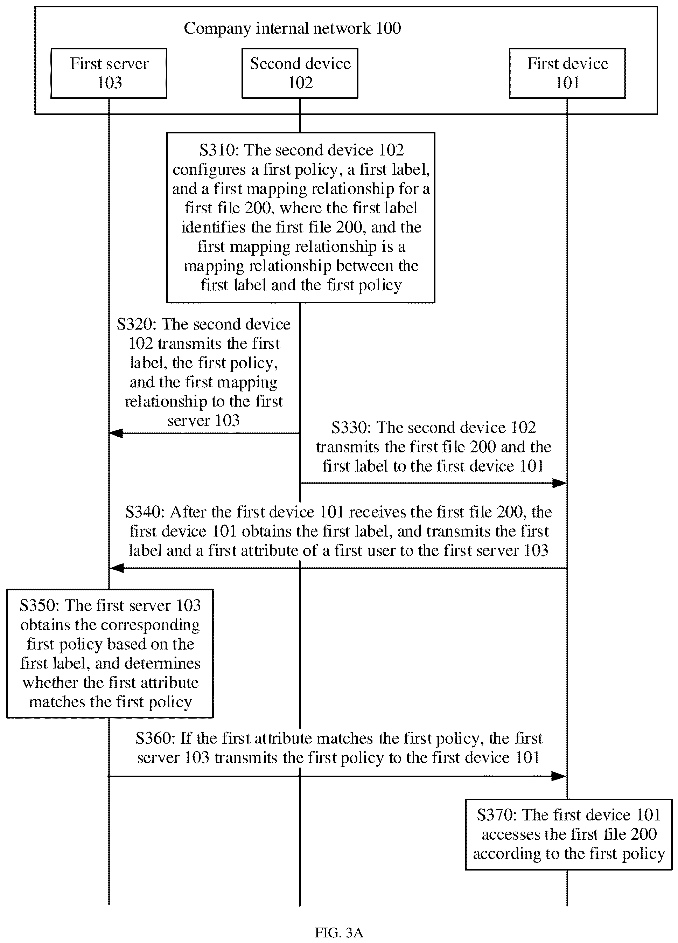

For example, FIG. 3A provides an example of the file transmission procedure. As shown in FIG. 3A, the file transmission procedure includes the following steps.

S310: The second device 102 configures a first label, the first policy, and a first mapping relationship for the first file 200. The first label identifies the first file 200, and the first mapping relationship is a mapping relationship between the first label and the first policy.

Optionally, the first label may identify N files, where N is a positive integer greater than or equal to 1, and identify a type of file. Correspondingly, the first policy configured in this case may be applied to a plurality of files in this type of file.

Optionally, configuring the first policy includes selecting one policy from N policies preset by the first company, where N is a positive integer greater than or equal to 1.

Optionally, the configuration includes generation and formulation. In other words, the first user may formulate the first policy for the first file.

Optionally, the label may alternatively not be used, and information that is of the first file 200 and that can be used to distinguish the first file from another file is directly used. For example, a file name named in a specific file naming manner, or a unique value calculated by using a hash (hash) algorithm for the first file 200. The algorithm is only used as an example, and there are other similar methods. When the label is not used, the first mapping relationship is also not required, which is equivalent to a one-to-one correspondence between a policy and a file. In this case, description about the label and the mapping relationship in the following steps may be omitted.

Alternatively, S310 may be performed by the first server 103 instead of the second device 102.

S320: The second device 102 transmits the first label, the first policy, and the first mapping relationship to the first server 103.

Optionally, the second device 102 encrypts the first label, the first policy, and the first mapping relationship into a first ciphertext by using a first key, and transmits the first ciphertext to the first server 103. In an implementation, the first key is a key randomly generated or preset by the second device 102, and the first key is transmitted to the first server 103 in advance. In an implementation, the first key is a key randomly generated or preset by the first server 103, and the first key is transmitted to the second device 102 in advance.

Alternatively, when S310 is performed by the first server 103 instead of the second device 102, S320 does not need to be performed.

S330: The second device 102 transmits the first file 200 and the first label to the first device 101.

Optionally, the second device 102 encrypts the first file 200 and the first label into a second ciphertext by using a second key, and transmits the second ciphertext to the first device 101. In an implementation, the second key is a key randomly generated or preset by the second device 102, and the second key is transmitted to the first device 101 in advance. In an implementation, the second key is a key randomly generated or preset by the first server 103, and the second key is transmitted to the second device 102 and the first device 101 in advance.

S340: After the first device 101 receives the first file 200, the first device 101 obtains the first label, and transmits the first label and the first attribute of the first user to the first server 103.

Optionally, the first label and the first attribute may be sent in ciphertext. For a specific encryption manner, refer to the foregoing description. Correspondingly, a peer end performs decryption in a corresponding decryption manner.

S350: The first server 103 obtains the corresponding first policy based on the first label, and determines whether the first attribute matches the first policy.

If the first attribute does not match the first policy, the first server 103 sends a failure message to the first device 101; and the first device 101 cannot open the first file 200, or fails to open the first file 200.

If the first attribute matches the first policy, the first server 103 transmits the first policy to the first device 101.

S360: If the first attribute matches the first policy, the first server 103 transmits the first policy to the first device 101.

Optionally, in S360, after obtaining the first key, the first server 103 further transmits the first key to the first device 101 in S360.

S370: The first device 101 accesses the first file 200 according to the first policy.

Optionally, in S370, the first device obtains the first key, and decrypts the ciphertext by using the first key, to obtain the first file 200.

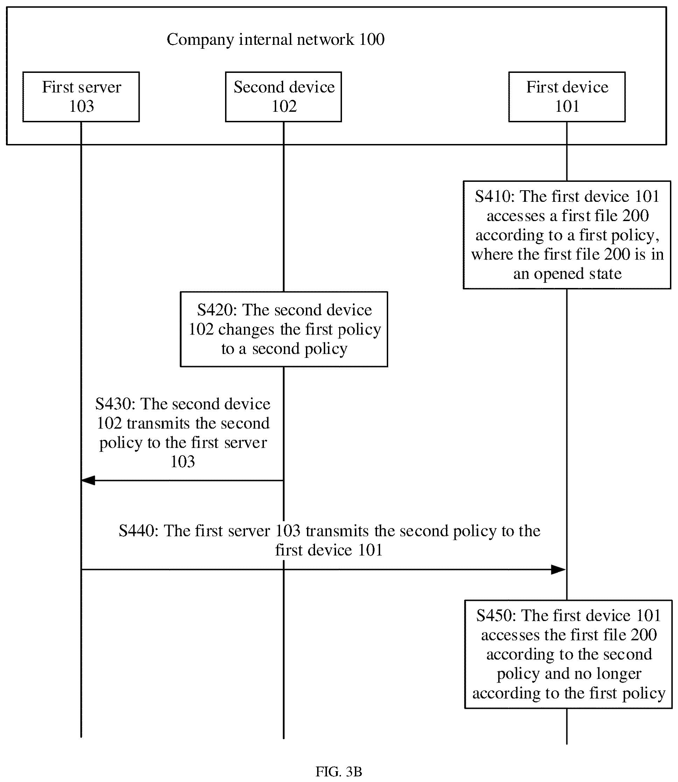

For example, FIG. 3B provides an example of the policy change procedure. As shown in FIG. 3B, the policy change procedure includes the following steps.

S410: The first device 101 accesses the first file 200 according to the first policy, where the first file 200 is in the opened state.

Optionally, the first policy may be integrated into an operating system of the first device 101, and is an operating system-level permission.

S420: The second device 102 changes the first policy to the second policy.

Specifically, the second device 102 changes the first policy of the first file 200 to the second policy. The second policy is different from the first policy. Correspondingly, after the change, a permission to access the first file 200 on the second device 102 is adjusted.

Optionally, the second device 102 modifies the first mapping relationship to a second mapping relationship, and modifies that the first policy corresponds to the first label to that the second policy corresponds to the first label.

Optionally, the second device 102 modifies the first label to a second label, and the second policy corresponding to the second label already exists on the server. In this manner, a plurality of file policies that use the first label on the server may be modified to the second policy in batches.

Optionally, the second device 102 modifies the first label of the first file to the second label, and the second policy corresponding to the second label already exists on the server. In this case, only the first label of the first file is modified in the label modification, and therefore only the first policy of the first file is modified to the second policy, to implement policy modification through modification of the label corresponding to the file.

S430: The second device 102 transmits the second policy to the first server 103.

Optionally, in response to that the second device 102 changes the first policy to the second policy, the second device immediately (immediately) transmits the second policy to the first server 103. In this way, real-time effect can be achieved.

In some embodiments, the second device 102 transmits the second mapping relationship and the second policy to the first server 103.

Alternatively, if the second policy already exists on the first server 103 (for example, the second policy is pre-transmitted by the first server 103 to the second device 102), the second device 102 transmits only the second mapping relationship to the first server 103.

Alternatively, S420 and S430 may be replaced with S420': The first server 103 modifies the first policy to the second policy. In this case, S420 and S430 do not need to be performed, and only S420' needs to be performed.

S440: The first server 103 transmits the second policy to the first device 101.

Optionally, in response to that the first server 103 receives the second policy, the first server 103 immediately (immediately) transmits the second policy to the first device 101. In this way, real-time effect can be achieved.

S450: The first device 101 accesses the first file 200 according to the second policy and no longer according to the first policy.

Optionally, in response to that the first device 101 receives the second policy, the first device 101 immediately (immediately) accesses the first file 200 according to the second policy and no longer according to the first policy. In this way, real-time effect can be achieved.

It should be noted that, even if the first file 200 is on the first device 101 and is always in the opened state in S410 to S450, after the first device 101 receives the second policy, the first device 101 immediately (immediately) accesses the first file 200 according to the second policy and no longer according to the first policy. For example, the second policy prohibits the first device 101 from opening the first file 200. Even if the first file 200 is on the first device 101 and is always in the opened state in S410 to S450, after the first device 101 receives the second policy, the first file 200 is immediately (immediately) closed on the first device 101 and cannot be opened.

Optionally, all policies about the first file 200 on the first device 101 are integrated into the operating system, and are operating system-level permissions. Correspondingly, after receiving the second policy, the first device 101 also updates the first policy to the first policy in the operating system.

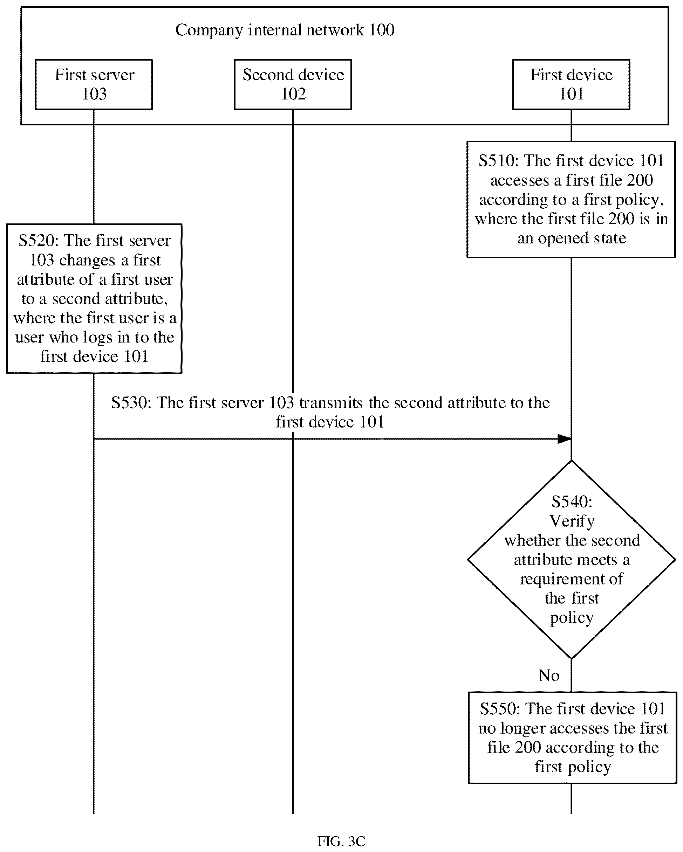

For example, FIG. 3C provides an example of the attribute change procedure. As shown in FIG. 3C, the attribute change procedure includes the following steps.

S510: The first device 101 accesses the first file 200 according to the first policy, where the first file 200 is in the opened state.

The first device 101 is logged in to by the first user. In S510, the attribute of the first user is the first attribute. For example, the first attribute is a junior-level leader of the company. Certainly, the first attribute may alternatively be an employee of the company.

S520: The first server 103 changes the first attribute of the first user to the second attribute, where the first user is a user who logs in to the first device 101.

In some embodiments, a company member (for example, a director of the human resource department of the company or a senior-level leader of the company) with a specific permission changes the attribute of the first user from the first attribute to the second attribute by using the first server 103. A company member with a specific permission may directly log in to the first server 103 to perform the change, or may access the first server 103 by using another device (for example, the second device 102) to perform the change by using the first server 103.

In S520, the attribute of the first user is changed to the second attribute. For example, the second attribute is an employee of the company. Certainly, the second attribute may alternatively be a middle-level leader of the company.

S530: The first server 103 transmits the second attribute to the first device 101.

Optionally, the transmission may be performed in a ciphertext manner. An encryption or decryption key of the ciphertext may be obtained and transmitted in the foregoing manner, and details are not described herein again.

In some embodiments, in response to that the first server 103 changes the first attribute of the first user to the second attribute, the first server 103 immediately (immediately) transmits the second attribute to the first device 101.

S540: The first device 101 verifies whether the second attribute meets a requirement of the first policy.

The first device 101 receives the second attribute, and verifies whether the second attribute meets the requirement of the first policy.

In some embodiments, in response to that the first device 101 receives the second attribute, the first device 101 immediately (immediately) verifies whether the second attribute meets the requirement of the first policy.

For example, the first policy is "Can be accessed by leaders above a junior-level leader of the company", and the second attribute is a normal employee of the company. In this case, the second attribute cannot meet the requirement of the first policy. In other words, a verification result is no, and in this case, S550 is performed.

Alternatively, the first policy includes a first sub-policy and a second sub-policy. For example, the first policy is "Can be fully accessed by leaders above a junior-level leader of the company, and other members can only access a part of content of the first file". The first sub-policy is "Can be fully accessed by leaders above a junior-level leader of the company", and the second sub-policy is "Other members can only access a part of content of the first file". The first attribute is a junior-level leader of the company. The second attribute is a normal employee of the company. In this case, the first user can access only a part of content of the first file. In this case, the first device 101 accesses the first file according to the second sub-policy and no longer according to the first sub-policy.

For example, the first policy is "Can be accessed by leaders above a junior-level leader of the company", and the second attribute is a middle-level leader of the company. In this case, the second attribute can meet the requirement of the first policy. In other words, if the verification result is yes, the first device 101 keeps accessing the first file according to the first policy.

S550: The first device 101 no longer accesses the first file 200 according to the first policy.

In some embodiments, the first device 101 no longer can access the first file 200 according to the first policy. Therefore, in this case, the first file 200 is closed and cannot be opened.

The first device 101 no longer can access the first file 200 according to the first policy.

Therefore, optionally, in an example in which the first policy in S540 includes the first sub-policy and the second sub-policy, the first device 101 accesses the first file according to the second sub-policy and no longer according to the first sub-policy.

In some embodiments, in response to that the verification result is no, the first file 200 is immediately closed and the first device 101 cannot open the first file 200. Certainly, the first device 101 can open the first file 200 only when the first device 101 is no longer logged in to by the first user but by another user (for example, the second user whose attribute meets the requirement of the first policy), or the second attribute is adjusted to an attribute that meets the requirement of the first policy again.

In some embodiments, in S510 to S540, the first file 200 is always in the opened state.

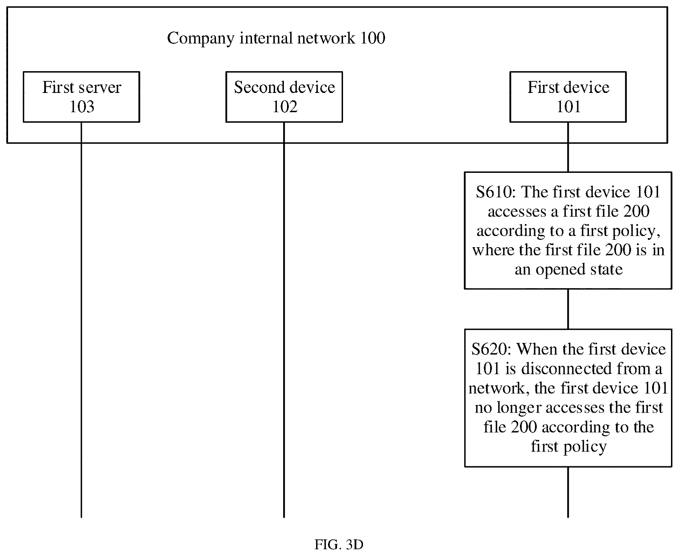

For example, FIG. 3D provides an example of the network disconnection processing procedure. As shown in FIG. 3D, the network disconnection processing procedure includes the following steps.

S610: The first device 101 accesses the first file 200 according to the first policy, where the first file 200 is in the opened state.

The first device 101 is logged in to by the first user.

S620: When the first device 101 is disconnected from a network, the first device 101 no longer accesses the first file 200 according to the first policy.

In some embodiments, in response to detecting that the first device 101 is disconnected from the network, the first device 101 immediately (immediately) no longer accesses the first file 200 according to the first policy. In this case, the first file 200 is immediately closed and cannot be opened; or content of the first file 200 immediately cannot be displayed; or a process of the first file 200 is immediately closed and the first file 200 cannot be opened.

Alternatively, if the first file 200 is not opened in S610, and the first device 101 is disconnected from the network, the first device 101 cannot perform an operation such as forwarding on the first file. The preceding operations are allowed to be performed only after the network is reconnected. For example, when an operation such as forwarding is performed on the first file, a prompt indicating that a network connection is required is displayed (for example, popped up). Further, after the network is connected, identity authentication needs to be performed again. For example, after the first device 101 is reconnected to the network, the first device 101 immediately performs authentication with the first server 103 once based on an attribute of a currently logged-in user, to obtain a latest policy corresponding to the current attribute.

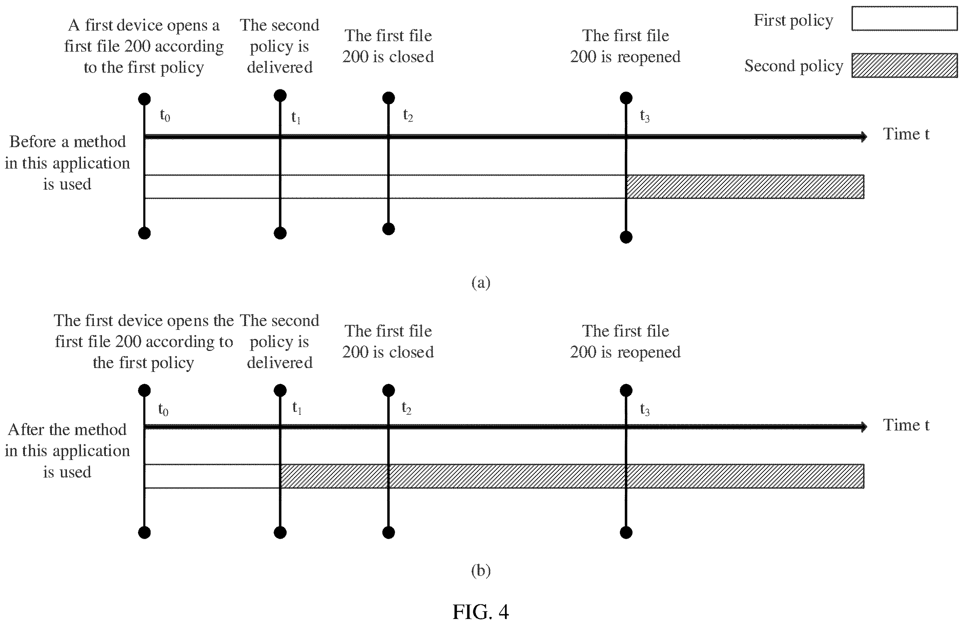

After the foregoing four procedures are described, the following specifically describes technical effects implemented in this application by using FIG. 4 to FIG. 7.

For example, in a scenario in which the first policy is modified, as shown in FIG. 4, the first device opens the first file 200 at a moment t₀ according to the first policy, and the second policy is delivered to the first device at t₁. Before the method in this application is applied, the first device needs to first close the first file 200 at t₂, and then reopen the first file 200 at t₃ according to the second policy. In a time interval from t₁ to t₃, the old first policy continues to be used. As a result, real-time performance is insufficient, causing a risk.

However, after the method in this application is applied, when the second policy is delivered to the first device at t₁, the first device may access the first file in real time according to the second policy, so that the first policy is prevented from continuing to be used in the time interval from t₁ to t₃, to improve real-time performance. Further, before the method in this application is applied, there is a problem of a time window without protection caused by a periodic polling request at an application layer. However, in the method of this application, a policy is updated and transferred in real time at a system layer, so that there is no time window without protection.

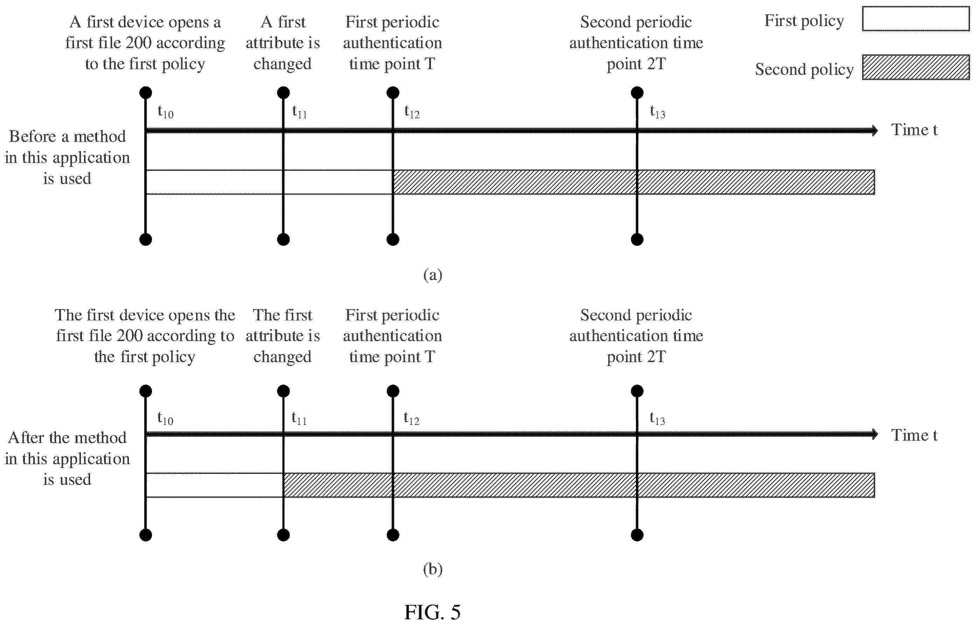

For example, in a scenario in which the first attribute of the first device is changed, as shown in FIG. 5, the first device opens the first file 200 at a moment t₁₀ according to the first policy, and the first attribute of the first device is changed to the second attribute at a moment t₁₁. Before the method in this application is applied, the first device can initiate authentication based on the second attribute and obtain the second policy only when a next periodic authentication time point t₁₂ arrives. In a time interval from t₁₁ to t₁₂, the old first policy continues to be used. As a result, real-time performance is insufficient, causing a risk. If the file is in the opened state, there is also the problem that the first file cannot be accessed in real time according to the second policy when the file is opened, as shown in FIG. 4, and consequently a longer risk window exists.

However, after the method in this application is applied, the first device opens the first file according to the first policy at t₁₀, and when the first attribute is changed to the second attribute at t₁₁, the first device actively initiates authentication in real time based on the second attribute and obtains and applies the second policy. This avoids a risk of insufficient real-time performance caused by continuing to use the first policy in the time interval from t₁₁ to t₁₂, and real-time performance improves compared to that before the method in this application is applied.

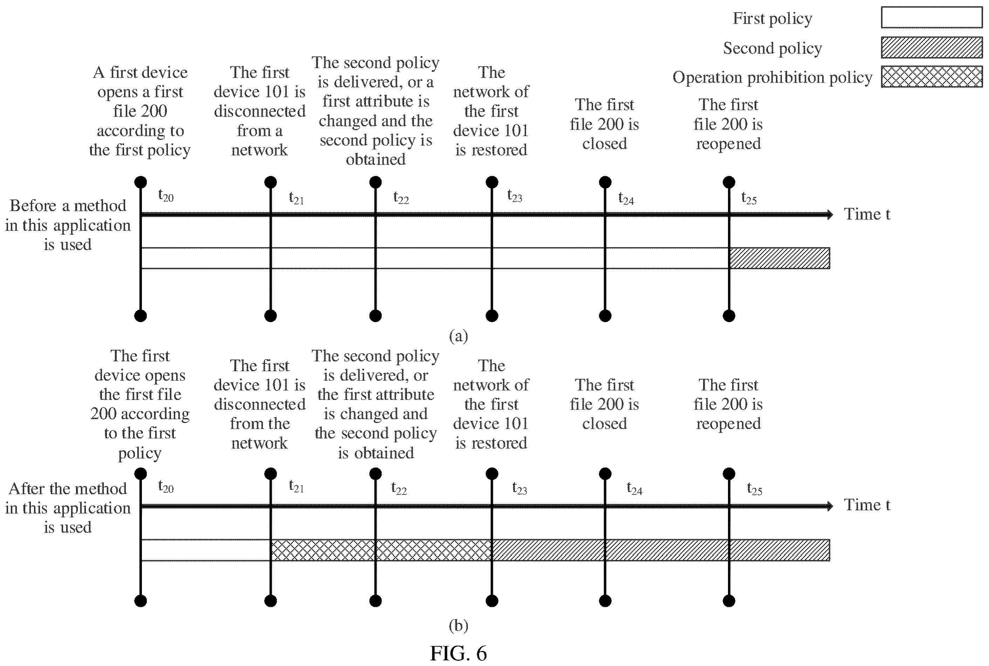

For example, in a scenario in which the first device is disconnected from the network, as shown in FIG. 6, the first device opens the first file 200 at a moment t₂₀ according to the first policy, and is disconnected from the network at a moment t₂₁, and the second device or the first server modifies the first policy to the second policy at a moment t₂₂. Before the method in this application is applied, the first device continues to use the first policy, and can access the first file according to the second policy only after the network of the first device is restored at t₂₃, the first file 200 is closed at t₂₄, and the first file 200 is reopened at t₂₅. In a time interval from t₂₁ to t₂₅, the old first policy continues to be used. As a result, real-time performance is insufficient, causing a risk.

However, after the method in this application is applied, the first device opens the first file 200 at the moment t₂₀ according to the first policy, the first device is disconnected from the network at the moment t₂₁, and the first device restricts the first user in real time by using a system permission, so that the first user cannot perform any operation on the first file 200. For example, the opened first file A becomes a white screen or a mosaic, and cannot be read or modified, and a process of forwarding or printing is immediately terminated. In this way, a risk of insufficient real-time performance caused by continuing to use the first policy in the time interval from t₂₁ to t₂₅ is avoided, and real-time performance improves compared with that before the method in this application is applied.

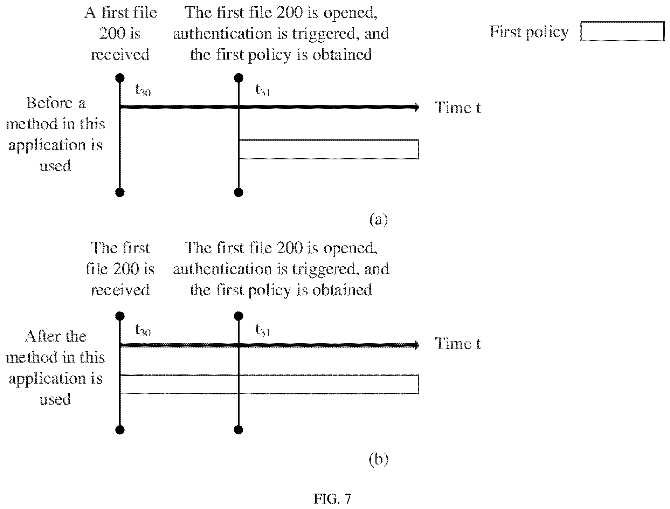

For example, in a scenario in which the first device just receives the first file 200, as shown in FIG. 7, before the method of this application is applied, the first device receives the first file 200 at a moment t₃₀, and triggers authentication and obtains the first policy only when the first file 200 is opened at a moment t₃₁. As a result, in a time period from t₃₀ to t₃₁, there is no policy protection, and there is a risk that an operation, such as forwarding, can be performed without opening the file.

After the method in this application is applied, after receiving the first file 200 at the moment t₃₀, the first device directly initiates authentication, and obtains and applies the first policy. In this way, a risk of insufficient real-time performance caused by absence of a policy in the time interval from t₃₀ to t₃₁ is avoided, and real-time performance improves compared with that before the method in this application is applied.

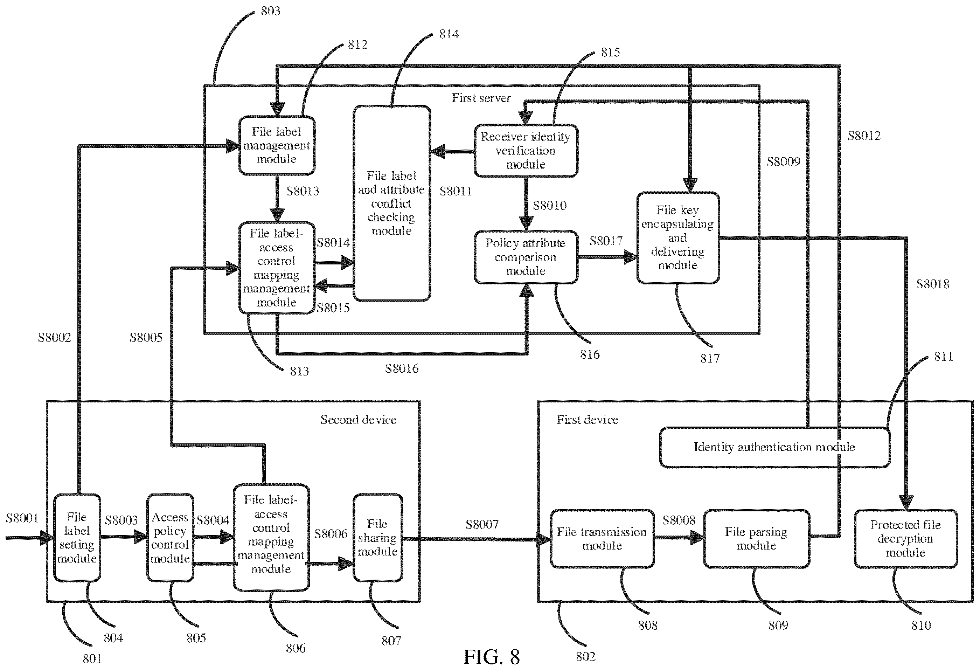

After the technical effects achieved in this application are described intuitively, internal modules of a device are introduced based on the original framework. For example, FIG. 8 shows an overall procedure of this application with involvement of the internal modules of the device.

The communication system includes the first device 101, the second device 102, and the first server 103. The first user logs in to the first device 101, and the second user logs in to the second device 102.

Optionally, the communication system may further include a third device, the second server, and the like.

On this basis, component modules of the second device 102 include: a file label setting module 801, an access policy control module 802, a file label-access control mapping module 803, and a file sharing module 804.

The file label setting module 801: sets a file label, and a manner of setting the file label includes but is not limited to configuring locally, defining by a user, or the like. This module provides label setting rules in different dimensions that include but are not limited to division based on file confidentiality, functional department, service, or the like. In addition, this module also supports a user-defined label library. The user-defined label includes but is not limited to a unique identifier of a file.

The access policy control module 802 is configured to: formulate a control policy, where different permissions of different users are formulated in the control policy, and permissions of only one type of users may be defined, or different permissions of a plurality of types of users may be defined. A user not defined in the policy has no permission by default.

The file sharing module 804 is configured to: transmit a file between the first device 101 and the second device 102.

Component modules of the first server 103 include a file label management module 805, a file label-access control mapping module 806, a file label and attribute conflict checking module 807, a receiver identity verification module 808, a policy attribute comparison module 809, and a file key encapsulating and delivering module 810.

The file label management module 805 is configured to: store, on the first server 103, a label uploaded by the second device 102.

The file label-access control mapping module 806 is responsible for a mapping relationship between the label of the first file 200 and the first policy. In addition, the mapping relationship on the second device 102 has a self-synchronization relationship with the mapping relationship stored by the file label-access control mapping module 806 on the first server 103. Content that needs to be maintained by the mapping module 806 includes storage of the label-access control mapping relationship. The first server 103 determines, based on the mapping relationship, whether a policy of a file matches an attribute of a user.

For example, in the file label-access control mapping module 806, the label and the policy mapping relationship may be stored in the form of Table 1, Table 2, or a mixture of Table 1 and Table 2. In addition, the storage may alternatively be performed in a form of a database, or another storage form that is not limited to the example form.

**Table 1: Example 1 of a label-policy mapping relationship table**

| Label | Policy | Related attribute |
|---|---|---|
| First label <top secret> | Can be viewed by employees at level A or above | Levels A, A+1, A+2... |
| Second label <secret> | Can be viewed by employees at level B or above | Levels B, B+1, B+2... |
| Third label <confidential> | Can be viewed by employees at level C or above | Levels C, C+1, C+2... |
| Fourth label <normal> | Can be viewed by employees at level D or above | Levels D, D+1, D+2... |

**Table 2: Example 2 of a label-policy mapping relationship table**

| Label | Policy | Related attribute |
|---|---|---|
| <File 1> | Can be viewed but cannot be copied by group A | Group A |
| | Can be viewed and can be copied by group B | Group B |
| <File 2> | Can be viewed by group B | Group B |
| <File 3> | Can be viewed by group C and group D | Group C and group D |
| <File 4> | Can be viewed by only account U | Account U |

In some implementations, a one-to-many or many-to-many mapping manner of a label and a policy may be used, and a combination manner includes but is not limited to a user-defined form of AND, OR, or NOT.

The file label and attribute conflict checking module 807 is responsible for two comparison tasks:
1. The file label-access control mapping management module 806 indexes the first policy based on a file label uploaded by the first device 101, and sends the first policy to the conflict checking module 807 for a conflict check, to avoid cases in which the first policy is not defined, the first policy is not logical and cannot be executed, or the like. Optionally, a file name or a unique value obtained through calculation performed on the file by using a hash algorithm may alternatively be in a one-to-one correspondence with the policy.
2. The first attribute of the first user transmitted by the receiver identity verification module 808 is obtained and a conflict check is performed, to avoid a situation in which subsequent matching cannot be performed, for example, attribute redundancy, an attribute transmission error, or an undefined attribute.

The receiver identity verification module 808: obtains user attribute uploaded by the first device 101, and distributes the user attribute to the file label and attribute conflict checking module 807 and the policy attribute comparison module 809.

The policy attribute comparison module 809: compares the user attribute with a control policy, and determines whether the attribute has a permission.

The file key encapsulating and delivering module 810: parses a policy ciphertext uploaded by the first device 101 to obtain a key, re-encapsulates the key and the first policy that is sent by the policy attribute comparison module 809, and then sends the re-encapsulated key and first policy to the first device 101.

Main component modules of the first device 101 include a file transmission module 811, a file parsing module 812, a protected file decryption module 813, and an identity authentication module 814.

The file transmission module 811 is configured to: transmit a file between the second device 102 and the first device 101.

The identity authentication module 814 is responsible for collecting and updating a user identity attribute. When the first attribute of the first user is changed to the second attribute (including but not limited to leaving a specific group, adding an identity attribute, and the like), the first attribute of the first user stored in the module is updated in real time, and the latest second attribute of the user is uploaded to the identity verification module 808 on the first server 103 side for first policy comparison.

The file parsing module 812: parses a spliced file sent by the second device 102, and then uploads the label of the first file 200 obtained through parsing to the first server 103.

The protected file decryption module 813: decrypts a ciphertext by using a key delivered by the first server 103, to obtain the first file 200.

The following specifically describes a communication interaction procedure of the system with reference to the internal modules of the first device 101, the second device 102, and the first server 103 in FIG. 8.

S8001: The second device 102 sets a label B for a first file A by using the file label setting module 801.

S8002: The second device 102 synchronizes the label B to the first server 103, and the first server 103 stores the label B.

In a possible implementation, the first server 103 stores the label B in the file label management module 805.

In a possible implementation, the first device 101 and the first server 103 already complete security authentication before an overall procedure starts, or interact with each other in another secure communication manner.

S8003: The second device 102 formulates a first policy C by using the access policy control module 802.

S8004: The second device 102 establishes a mapping relationship D between the first policy C and the set label B by using the file label-access control mapping management module 803.

S8005: The second device 102 synchronizes the first policy C and the mapping relationship D to the first server 103, and the first server 103 stores the first policy C and the mapping relationship D.

In a possible implementation, the first server 103 stores the mapping relationship D in the file label-access control mapping management module 806, and stores the first policy C in the policy attribute comparison module 809.

In a possible implementation, the second device 102 combines the label B in S8002 and the first policy C and the mapping relationship D in S8005 into one message for sending. In a possible implementation, the second device 102 respectively sends the label B in S8002 and the first policy C and the mapping relationship D in S8005 in two messages.

In a possible implementation, synchronization of the label B in S8002 and the first policy C and the mapping relationship D in S8005 of the second device 102 are automatically performed by the device.

In a possible implementation, synchronization of the label B in S8002 and the first policy C and the mapping relationship D in S8005 of the second device 102 is triggered by a manual operation of a user.

S8006: After completing S8003, the second device 102 performs the following steps by using the access policy control module 802.

The first file A is encrypted by using a key E to obtain a file ciphertext F.

The key E is encapsulated based on information about the first server 103 to generate a policy ciphertext G.

In a possible implementation, the key E may be freely selected by the user, and may be a key randomly generated on site, or may be a key that is made in advance and selected by the user.

In a possible implementation, when the policy ciphertext G is encapsulated, the first policy C and the key E are encapsulated together.

For example, an encryption algorithm used in this step may be, but is not limited to, one of the following encryption algorithms: symmetric encryption algorithms such as DES, 3DES, AES, SM1, SM4 and Blowfish, asymmetric encryption algorithms such as RSA, DSA, DSS, SM2, and ELGamal, and hash (hash) algorithms such as MD5, sha1, sha224, and SM3.

In a possible implementation, a manner of obtaining the information about the first server 103 includes but is not limited to: disclosing in advance, periodically releasing, or obtaining when a file sender, the second device 102, performs authentication interaction with a control server, the first server 103.

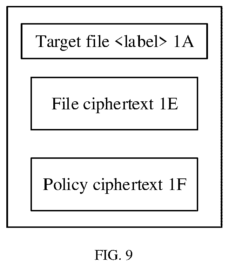

S8007: The second device 102 splices the label B, the file ciphertext F, and the policy ciphertext G into a protected file H shown in FIG. 9, and sends the protected file H to the first device 101 by using the file sharing module 804. It should be noted that the splicing manner in FIG. 9 is merely an example, and the file may be transmitted to a file receiver in another form.

S8008: The first device 101 receives the protected file H.

In a possible implementation, the first device 101 performs management and control on the protected file H at an operating system level, to obtain a higher permission than an application that opens the file. For example, in a Windows operating system, a permission controller for the protected file, a text document 8a, is System, instead of a currently logged-in user User or administrator Administrator of the operating system. However, the currently logged-in user User or administrator Administrator is used when a text editor is used to open the text document 8a. In this case, based on a permission rule of the operating system, a priority of System is higher than that of User and Administrator. When a new control policy is received and needs to be applied, including access prohibition, System can directly deliver the new control policy and command application of the new control policy without being limited by operation inability caused by occupation when the text editor opens the text document 8a. In specific implementation, a possible implementation of updating the control policy includes but is not limited to registering a switching mechanism by a system bottom-layer sandbox to switch a program buffer. For another example, two memory buffers A and B may be used. An original control policy of program running is in the buffer A, a new control policy is updated to the buffer B, and the system controls a program to switch the buffer to implement policy update.

S8009: The first device 101 uploads, by using the identity authentication module 814, an identity attribute J of the first user to the control server, the first server 103, for authentication.

In a possible implementation, the first device 101 triggers authentication immediately after receiving the protected file H.

In a possible implementation, the first device 101 may alternatively trigger authentication when attempting to open the protected file H.

In a possible implementation, the first device 101 may alternatively trigger authentication periodically. The period may be freely set, or may be a default period in the system. A period length may be any proper time period such as 10 minutes, 1 hour, or 1 day.

S8010: After receiving the identity attribute J, the first server 103 sends the identity attribute J to the policy attribute comparison module 809 for subsequent comparison.

S8011: After receiving the identity attribute J, the first server 103 sends the identity attribute J to the file label and attribute conflict checking module 807 for a conflict check.

In a possible case, the file label and attribute conflict checking module 807 fails to perform the check, and a failure scenario includes but is not limited to an attribute transmission error, an undefined attribute, an attribute that does not meet a requirement, or the like. In this case, the procedure is terminated, a failure message is returned to the first device 101, and a receiver, the first device 101, fails to open the file.

S8012: The first device 101 parses the protected file H by using the file parsing module 812 to obtain the label B and the policy ciphertext G, and when authentication is triggered in S8009, also sends the label B and the policy ciphertext G to the first server 103.

S8013: After receiving the label B, the file label management module 805 of the first server 103 sends the label B to the file label-access control mapping management module 806.

In a possible implementation, the file label management module 805 checks validity of the label. If the uploaded label B does not match any label in a stored label library, the procedure is terminated, the first server 103 returns a failure message to the first device 101, and the receiver, the first device 101, fails to open the file.

S8014: The file label-access control mapping management module 806 of the first server 103 indexes the first policy C by using a stored label-control policy mapping relationship, and sends the first policy C to the file label and attribute conflict checking module 807 for a conflict check.

In a possible case, the file label and attribute conflict checking module 807 fails to perform the check, and a failure scenario includes but is not limited to an undefined control policy, an illogical control policy, or the like. In this case, the procedure is terminated, and a failure message is returned to the first device 101.

S8015: The file label and attribute conflict checking module 807 completes the conflict check.

S8016: The first server 103 sends the first policy C to the policy attribute comparison module 809, and the policy attribute comparison module 809 compares the first policy C with reference to the identity attribute J of the first device 101 obtained in S8010, to determine whether the first device 101 has a manipulation permission for the file.

S8017: When the comparison in S8016 succeeds, the policy attribute comparison module 809 sends the first policy C to the file key encapsulating and delivering module 810, and the file key encapsulating module 810 decrypts the policy ciphertext G received in S8012, to obtain the key E. Then, the file key encapsulating and delivering module re-encapsulates the key E and the first policy C into a re-encapsulated packet K, and delivers the re-encapsulated packet K to the first device 101.

In a possible implementation, after the comparison in S8016 fails, the policy attribute comparison module 809 directly sends failure information, terminates the procedure, and returns a failure message to the first device 101, and the receiver, the first device 101, fails to open the first file A.

In a possible implementation, a security manner is used during making and/or transmission of the re-encapsulated packet K, and the security manner includes but is not limited to the following manners: A public key of the first device 101 encrypts the key E and the first policy C; and a secure encryption tunnel is established between the first device 101 and the first server 103, the re-encapsulated packet of the key E and the first policy C is transmitted in the secure encryption tunnel, and a secure encryption tunnel protocol may be but is not limited to an IP layer security network technology (IP Security, IPsec), a Layer Two Tunneling Protocol (Layer Two Tunneling Protocol, L2TP), OpenVPN and/or Secure Socket Tunneling Protocol (Secure Socket Tunneling Protocol, SSTP), Hypertext Transfer Protocol Secure (Hypertext Transfer Protocol Secure, HTTPS) transmission, and the like.

S8018: After receiving the re-encapsulated packet K, the first device 101 extracts the key E and the first policy C, decrypts the file ciphertext F by using the key E to obtain the first file A, and executes a corresponding action, including but not limited to reading, copying, printing, forwarding, and the like, according to the first policy C.

On the basis of the foregoing first procedure, the following may be further applied to update the first policy C.

In a possible implementation, to modify the first policy C to a second policy C', the second device 102 sends the second policy C' (including a second mapping relationship D') to the first server 103 in a manner of S8005.

Updating the first policy C may be to restrict a user and/or a type of user from continuing to use the first policy C, or may be to reduce or expand a permission on the basis of the original first policy C. For example, the first policy may alternatively be directly updated by the first server 103.

In this alternative manner, the first server 103 stores the second policy (and possibly the second mapping relationship), searches for all second devices 102 that perform access according to the first policy. The second devices are referred to as users herein, and the second policy is pushed to the users. Optionally, in an implementation, the first server 103 may create a plurality of tables in a database, and record the file, the label, the control policy, the information about the first device 101, and the like in each table by using a proper classification method, for example, in a form of Table 3. The first server 103 may directly use a media access control address (mac) address or an IP address information in the table to push to the user. A user to which the first server successfully pushes is marked as active (Active), and a user to which the first server fails to push is marked as inactive (Inactive). Because failing to push to the user indicates that the user is unreachable, when modification is performed next time, the first server pushes to only the active user, to reduce signaling impact on the network. In this case, because this may be classified as a network disconnection state problem, file security may be ensured through implementation of this method on the second device 102. If the user re-initiates and completes an authentication procedure on the first server 103, after obtaining a latest policy, the user restores to be marked as the active (Active) state in the corresponding policy table.

**Table 3: Database policy-user information record table**

| First policy-user information table | | | | | |
|---|---|---|---|---|---|
| Historical iteration version information of the first policy | | | Policy B yy-mm-dd-hh-mm-ss | | |
| | | | Policy A yy-mm-dd-hh-mm-ss | | |
| Name | Label | Mac address | | IP address | Active status |
| User 1 | A | aa-aa-aa-11-11-11 | | 10.1.1.1 | Active |
| User 2 | Aa | bb-bb-bb-22-22-22 | | 10.1.1.2 | Inactive |
| User 3 | Bee | cc-cc-cc-33-33-33 | | 10.1.1.3 | Active |

In a possible implementation, during next authentication, in step S8012, the first device 101 also sends the second policy C' to the first server 103 for comparison.

In a possible implementation, the first device 101 triggers authentication when the identity attribute J of the first device 101 is modified, and a modification manner may be but is not limited to: locally modifying by the first device 101, delivering, by the second device 102 (or the third device), an instruction to the first device 101 by using a network for modification, initiating modification by the first server 103, or the like. If new identity information corresponds to a new control policy, the new control policy is also applied.

In a possible implementation, when the first device 101 is disconnected from the network, if the first file A is in the opened state in this case, the system permission in S8008 is immediately used, to prohibit the first device 101 from continuing to perform an operation on the first file A, and pop up a prompt indicating that a network connection is required for re-authentication. In other words, the first device has no permission for the protected file H when being disconnected from the network. For example, the opened first file A becomes a white screen or mosaic, and cannot be read or modified, and an ongoing process of forwarding or printing the first file is immediately terminated. This method can resolve a problem that the policy may be out of control caused by the network disconnection state in FIG. 6. In another possible case, if the network is disconnected when the first file A is not in the opened state, and an operation such as forwarding the file is to be performed, a prompt indicating that a network connection is required for re-authentication is also popped up.

In a possible implementation, the label is not used, and information that can be used to distinguish the file from another file is directly used, for example, a file name named in a specific file naming manner, and a value that is unique in the system and that is obtained through calculation on the file by using the hash algorithm.

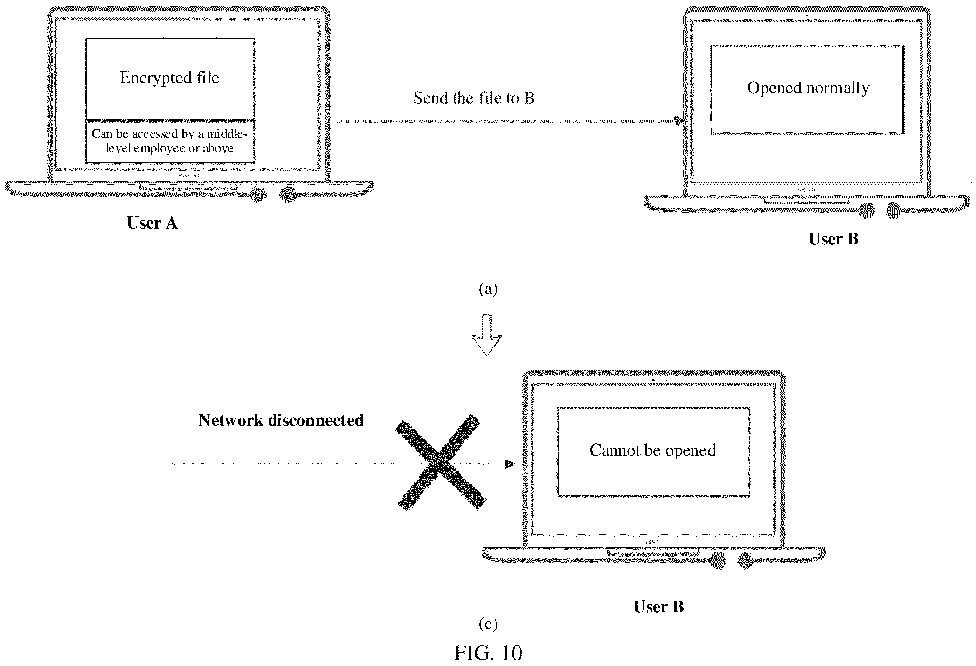

In an embodiment related to FIG. 10, the second device 102 adds a label on a file. For example, the label may be top secret, secret, or normal. The labels with different definitions correspond to different user permissions for requiring to open. For example, the top secret label corresponds to that only users whose attributes are senior-level employees of a company can open; the secret label corresponds to that users whose attributes are middle-level employees and above of the company, that is, middle-level employees and senior-level employees, can open; and the normal label is that users whose attributes are employees of the company can open.

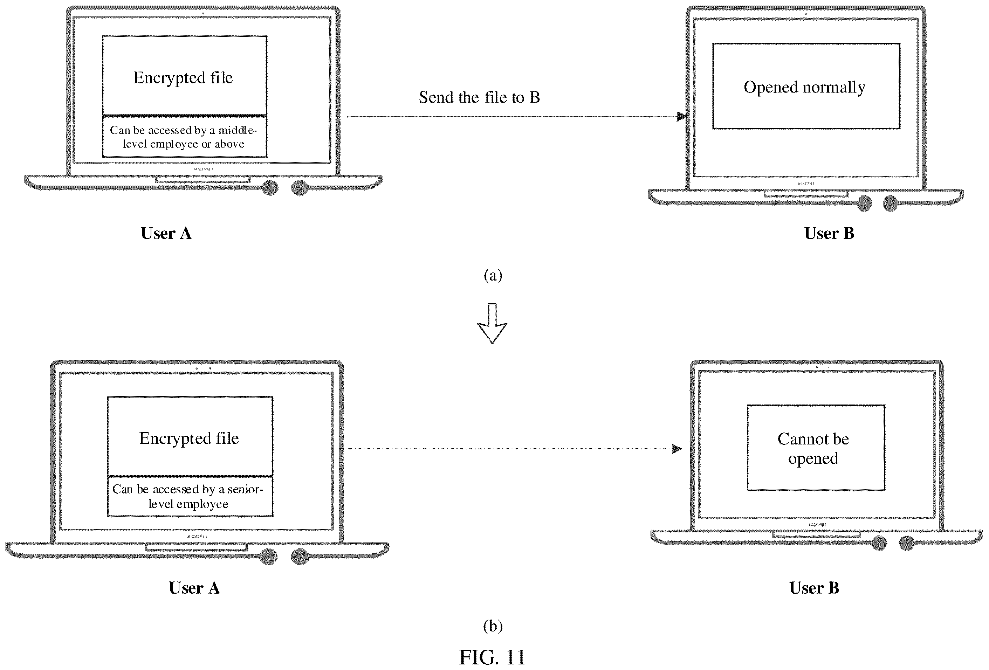

In an embodiment related to FIG. 11, the second device 102 selects a label "secret" for a file, and a corresponding permission requirement is that users whose attributes are middle-level and senior-level employees can access. The file is sent to a middle-level employee B of the first device 101. After receiving the file, B can open the file normally. Then, A modifies the permission requirement to that only users whose attributes are senior-level employees can open the file. After the modification, B tries to open the file, and fails to open the file due to insufficient permission. Optionally, to implement this effect, A may change the file label to "confidential" or modify a policy corresponding to the existing label "secret" of the file to be that only senior-level members can open.

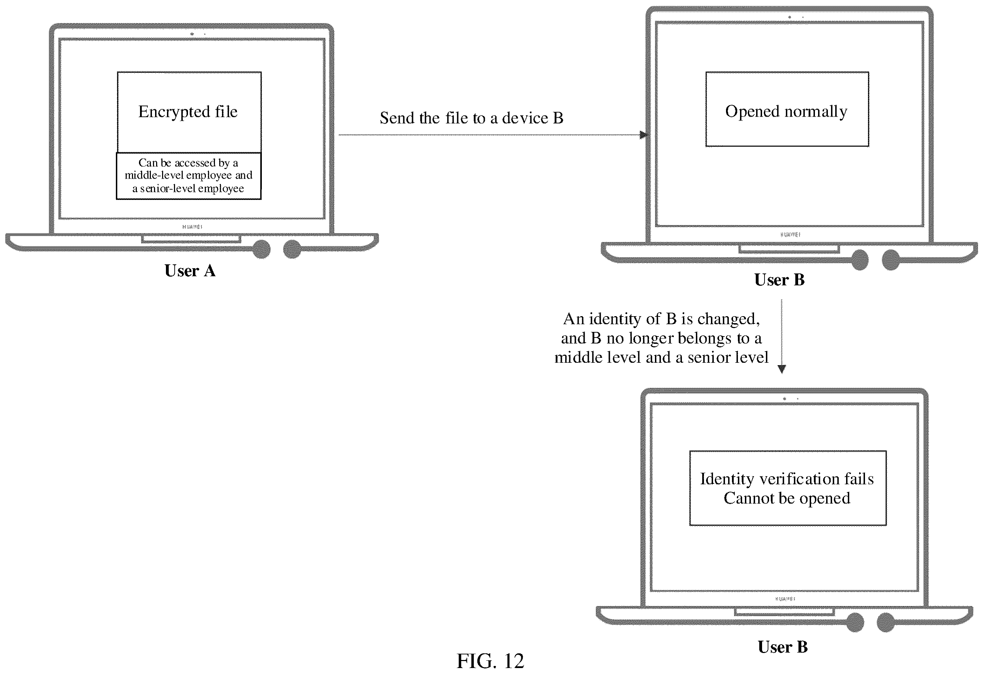

In an embodiment related to FIG. 12, the second device 102 adds a label on a file, and a control policy is that middle-level and senior-level employees can access, and after an access policy is formulated, the file is sent to a middle-level employee B of the first device 101. After receiving the file, B can open the file normally. Then, an identity of B is changed, and B is no longer a middle-level employee or a senior-level employee of the company, and consequently does not meet the permission requirement. In this case, B no longer can open the file.

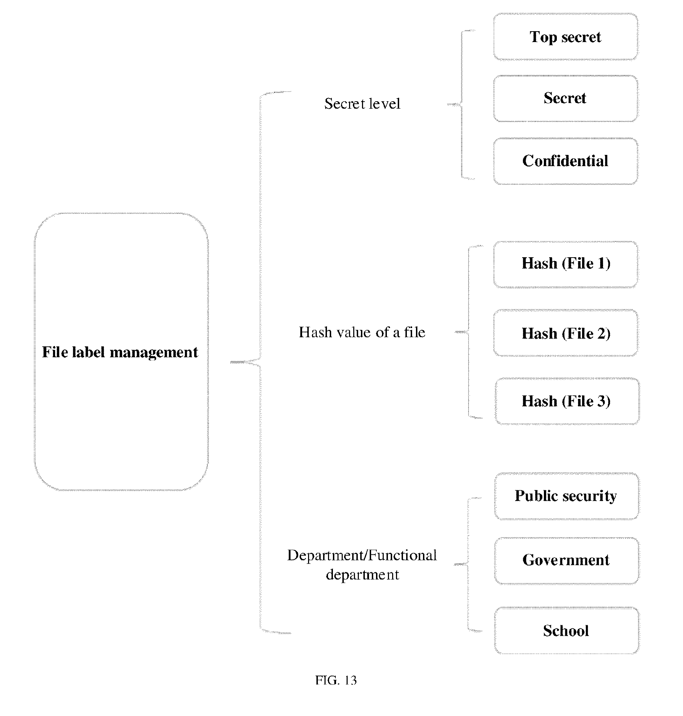

In an embodiment related to FIG. 13, some file label definition manners are described by using examples.
1. Applicable to a large quantity of documents: Labels are categories, and documents are defined as different permission categories respectively for management.
2. Applicable to a management and control scenario of some very sensitive files: Labels are files, and for highly-sensitive files, a label of each file is specifically defined based on, for example, a hash value of the file.
3. Applicable to document ownership/generation source: Departments are assigned with different document permissions for different departments to implement a function of quickly accessing, by the different apartments, internal documents of their own apartments and isolating visitors from other departments.

It should be noted that, without a contradiction, any step and any technical feature of the foregoing embodiments of this application may be freely and randomly combined. The technical solutions obtained through combination also fall within the scope of this application.

In addition, all or some of the steps in the foregoing embodiments of this application may also constitute the technical solutions provided in embodiments of this application, and fall within the scope of this application.

It may be understood that to implement the foregoing functions, the first device or the second device includes corresponding hardware structures and/or software modules for performing the functions. A person skilled in the art should be easily aware that, in combination with units and algorithm steps of the examples described in embodiments disclosed in this specification, embodiments of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the first device or the second device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that module division in embodiments of this application is an example, and is merely logical function division. In actual implementation, there may be another division manner.

In the technical solution in embodiments of this application, acceleration data of a first preset duration obtained by using an acceleration sensor may be used as a condition or one of conditions for determining whether a subsequent vehicle preparation condition is met. Determining of whether the subsequent vehicle preparation is met may alternatively be performed by using another sensor. A specific type of the sensor is not limited in this application.

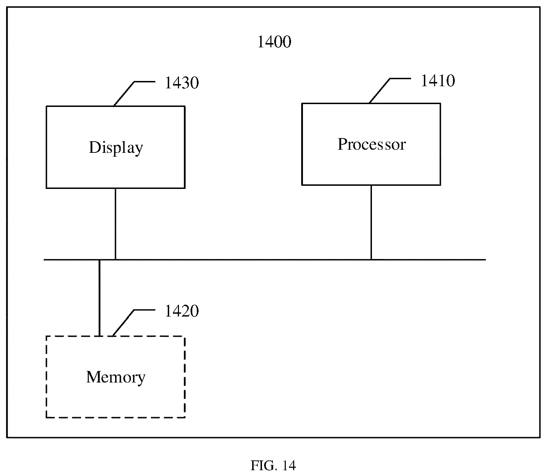

In an example, FIG. 14 is a diagram of a possible structure of the first device in the foregoing embodiments. As shown in FIG. 14, a first device 1400 includes a processor 1410, a memory 1420, and a display 1430. The processor 1410 is coupled to the memory 1420 and the display 1430. The coupling in this embodiment of this application may be a communication connection, and may be implemented in an electronic or another form. Specifically, the memory 1420 is configured to store a computer program. The display 1430 is configured to display a user interface. The processor 1410 is configured to invoke the computer program stored in the memory 1420, to enable the first device 1400 to perform the steps performed by the first device in the communication method provided in embodiments of this application. For related procedures, refer to the foregoing description. Details are not described herein again.

In some embodiments, when the display has a touch function, the display is also referred to as a touch display. An operation on the touch display may be implemented through a virtual key. When the display has no touch function, the display is also referred to as a non-touch display. An operation on the non-touch display may be implemented through a physical button.

This application provides a computer program product. When the computer program product is run on the first device, the first device is enabled to perform the steps performed by the first device in the communication method provided in embodiments of this application.

This application provides a computer-readable storage medium that includes a computer program. When the computer program is run on the first device, the first device is enabled to perform the steps performed by the first device in the communication method provided in embodiments of this application.

Optionally, the first device 1400 may not include the display 1430.

Optionally, a second device may include the same structures as the first device, and is only configured to perform the steps performed by the second device in the communication method provided in embodiments of this application.

This application provides a computer program product. When the computer program product is run on the second device, the second device is enabled to perform the steps performed by the second device in the communication method provided in embodiments of this application.

This application provides a computer-readable storage medium that includes a computer program. When the computer program is run on the second device, the second device is enabled to perform the steps performed by the second device in the communication method provided in embodiments of this application.

A person skilled in the art may clearly understand that embodiments of this application may be implemented by hardware, or by hardware and software. When embodiments of this application are implemented by hardware and software, the foregoing functions may be stored in the computer-readable medium. Based on such an understanding, the technical solutions of embodiments of this application essentially, or the part contributing to the conventional technology, or all or some of the technical solutions may be implemented in a form of a software product. The computer software product is stored in a storage medium and includes several computer programs for enabling a computer device (which may be a personal computer, a server, a network device, or the like) or a processor to perform all or some of the steps of the method described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application should be subject to the protection scope of the claims of this application.

## Claims

1. A communication method, wherein the method is applied to a communication system, the communication system comprises a first device, a second device, and a first server, the first device is logged in to by a first user, the first device, the second device, and the first server communicate through a first local area network, and the method comprises:
receiving, by the first device, a first file from the second device;
accessing, by the first device, the first file according to a first policy, wherein the first file is in an opened state;
changing, by the second device, the first policy to a second policy, wherein the second policy is different from the first policy;
transmitting, by the second device, the second policy to the first server;
transmitting, by the first server, the second policy to the first device; and
in response to receiving the second policy from the first server, immediately accessing, by the first device, the first file according to the second policy.

2. The method according to claim 1, wherein the first policy is a policy transmitted by the first server to the first device before the first device accesses the first file according to the first policy.

3. The method according to claim 2, wherein before the first server transmits the first policy to the first device, the method comprises:
receiving, by the first server, a first label and a first attribute of the first user from the first device, wherein the first label identifies the first file.

4. The method according to claim 3, wherein the method comprises:
in response to receiving the first label and the first attribute from the first device, immediately obtaining, by the first server, the corresponding first policy based on the first label, and determining whether the first attribute matches the first policy.

5. The method according to claim 4, wherein the method comprises:
in response to determining that the first attribute matches the first policy, immediately transmitting, by the first server, the first policy to the first device.

6. The method according to claim 5, wherein before receiving the first label and the first attribute from the first device, the method comprises:
receiving, by the first server, the first label, the first policy, and the first mapping relationship from the second device, wherein the first mapping relationship is a mapping relationship between the first label and the first policy.

7. The method according to any one of claims 1 to 6, wherein before changing, by the second device, the first policy to the second policy, the method comprises:
in response to detecting that the first device is disconnected from a network, immediately no longer accessing, by the first device, the first file according to the first policy until the first device is reconnected to the network and passes identity authentication of the first user.

8. The method according to claim 7, wherein immediately no longer accessing, by the first device, the first file according to the first policy comprises:
the first file opened on the first device is immediately closed and is non-openable; or
content of the first file on the first device is immediately non-displayable.

9. The method according to claim 8, wherein immediately no longer accessing, by the first device, the first file according to the first policy comprises: displaying, by the first device, a prompt indicating that a network connection is required.

10. The method according to any one of claims 1 to 9, wherein the first file is always in the opened state before the first device immediately accesses the first file according to the second policy and after the first device accesses the first file according to the first policy and the first file is in the opened state.

11. A communication method, wherein the method is applied to a communication system, the communication system comprises a first device, a second device, and a first server, the first device is logged in to by a first user, the first device, the second device, and the first server communicate through a first local area network, and the method comprises:
receiving, by the first device, a first file from the second device;
accessing, by the first device, the first file according to a first policy, wherein the first file is in an opened state;
changing, by the first server, a first attribute of the first user to a second attribute, wherein the second attribute is different from the first attribute;
transmitting, by the first server, the second attribute to the first device;
verifying, by the first device, whether the second attribute meets a requirement of the first policy; and
in response to verifying that the second attribute does not meet the requirement of the first policy, immediately no longer accessing, by the first device, the first file according to the first policy.

12. The method according to claim 11, wherein immediately no longer accessing, by the first device, the first file according to the first policy comprises:
the first file opened on the first device is immediately closed and is non-openable; or
content of the first file on the first device is immediately non-displayable.

13. The method according to claim 11, wherein the first file is always in the opened state before the first device immediately no longer accesses the first file according to the first policy and after the first device accesses the first file according to the first policy and the first file is in the opened state.

14. The method according to any one of claims 11 to 13, wherein the first policy is a policy transmitted by the first server to the first device before the first device accesses the first file according to the first policy.

15. The method according to claim 14, wherein before the first server transmits the first policy to the first device, the method comprises:
receiving, by the first server, a first label and the first attribute of the first user from the first device, wherein the first label identifies the first file.

16. The method according to claim 15, wherein the method comprises:
in response to receiving the first label and the first attribute from the first device, immediately obtaining, by the first server, the corresponding first policy based on the first label, and determining whether the first attribute matches the first policy.

17. The method according to claim 16, wherein the method comprises:
in response to determining that the first attribute matches the first policy, immediately transmitting, by the first server, the first policy to the first device.

18. The method according to claim 17, wherein before receiving the first label and the first attribute from the first device, the method comprises:
receiving, by the first server, the first label, the first policy, and the first mapping relationship from the second device, wherein the first mapping relationship is a mapping relationship between the first label and the first policy.

19. A communication system, wherein the communication system comprises a first device, a second device, and a first server, the first device is logged in to by a first user, and the first device, the second device, and the first server communicate through a first local area network;
the first device performs the following steps:
receiving a first file from the second device;
accessing the first file according to a first policy, wherein the first file is in an opened state; and
in response to receiving a second policy from the first server, immediately accessing, by the first device, the first file according to the second policy;
the second device performs the following steps:
changing the first policy to the second policy, wherein the second policy is different from the first policy; and
transmitting the second policy to the first server; and
the first server performs the following step:
transmitting the second policy to the first device.

20. The communication system according to claim 19, wherein
before the second device changes the first policy to the second policy, the first device further performs the following step:
in response to detecting that the first device is disconnected from a network, immediately no longer accessing, by the first device, the first file according to the first policy until the first device is reconnected to the network and passes identity authentication of the first user.

21. The communication system according to claim 19, wherein immediately no longer accessing, by the first device, the first file according to the first policy comprises:
the first file opened on the first device is immediately closed and is non-openable; or
content of the first file on the first device is immediately non-displayable.

22. A communication system, wherein the communication system comprises a first device and a first server, the first device is logged in to by a first user, and the first device and the first server communicate through a first local area network;
the first device performs the following steps:
receiving a first file from the second device;
accessing the first file according to a first policy, wherein the first file is in an opened state;
verifying whether the second attribute meets a requirement of the first policy; and
in response to verifying that the second attribute does not meet the requirement of the first policy, immediately no longer accessing, by the first device, the first file according to the first policy; and
the first server performs the following steps:
changing a first attribute of the first user to the second attribute, wherein the second attribute is different from the first attribute; and
transmitting the second attribute to the first device.

23. The communication system according to claim 22, wherein immediately no longer accessing, by the first device, the first file according to the first policy comprises:
the first file opened on the first device is immediately closed and is non-openable; or
content of the first file on the first device is immediately non-displayable.

24. The communication system according to claim 22 or 23, wherein the first policy is a policy transmitted by the first server to the first device before the first device accesses the first file according to the first policy.

25. A communication method, wherein the method is applied to a first device, the first device is logged in to by a first user, the first device, a second device, and a first server communicate through a first local area network, and the method comprises:
receiving, by the first device, a first file from the second device;
accessing, by the first device, the first file according to a first policy, wherein the first file is in an opened state; and
in response to receiving the second policy from the first server, immediately accessing, by the first device, the first file according to the second policy.

26. The method according to claim 25, wherein before receiving the second policy from the first server, the method comprises:
in response to detecting that the first device is disconnected from a network, immediately no longer accessing, by the first device, the first file according to the first policy until the first device is reconnected to the network and passes identity authentication of the first user.

27. The method according to claim 26, wherein immediately no longer accessing, by the first device, the first file according to the first policy comprises:
the first file opened on the first device is immediately closed and is non-openable; or
content of the first file on the first device is immediately non-displayable.

28. The method according to claim 27, wherein the first file is always in the opened state before the first device immediately accesses the first file according to the second policy and after the first device accesses the first file according to the first policy and the first file is in the opened state.

29. A communication method, wherein the method is applied to a first device, the first device is logged in to by a first user, the first device, a second device, and a first server communicate through a first local area network, and the method comprises:
receiving a first file from the second device;
accessing the first file according to a first policy, wherein the first file is in an opened state, and in this case, an attribute of the first user is a first attribute;
in response to receiving a second attribute from the first server,
verifying whether the second attribute meets a requirement of the first policy; and
in response to verifying that the second attribute does not meet the requirement of the first policy, immediately no longer accessing the first file according to the first policy.

30. The method according to claim 29, wherein immediately no longer accessing, by the first device, the first file according to the first policy comprises:
the first file opened on the first device is immediately closed and is non-openable; or
content of the first file on the first device is immediately non-displayable.

31. The method according to claim 30, wherein the first file is always in the opened state before the first device immediately no longer accesses the first file according to the first policy and after the first device accesses the first file according to the first policy and the first file is in the opened state.

32. The method according to any one of claims 29 to 31, wherein the first policy is a policy transmitted by the first server to the first device before the first device accesses the first file according to the first policy.

33. An electronic device, wherein the electronic device is a first device, the first device comprises a processor and a memory, the memory stores a computer program, and when the computer program is run by the processor, the first device is enabled to perform the method according to any one of claims 25 to 32.

34. A computer-readable storage medium, storing a computer program, wherein when the computer program is run on a first device, the first device is enabled to perform the method according to any one of claims 25 to 32.

35. A computer program product, stored in a computer-readable storage medium, wherein when the computer program product is run on a first device, the first device is enabled to perform the method according to any one of claims 25 to 32.

36. A chip, wherein the chip comprises a processor and a memory coupled to the processor, the memory stores a computer program, the chip is located in a first device, and when the processor executes the computer program, the first device is enabled to perform the method according to any one of claims 25 to 32.
